# FASCICULE DE BREVET EUROPEEN

(11) **EP 2 665 597 B1**
(45) Date de publication et mention de la délivrance du brevet: **11.03.2015**
(21) Numéro de dépôt: 12705337.9
(22) Date de dépôt: 18.01.2012
(51) Int. Cl.: B29C 70/46, B29C 70/86, B29D 99/00, B29C 53/82, B29C 70/44, F16B 5/01

(54) **FERRURE MULTI-BRANCHE EN MATERIAU COMPOSITE ET PROCEDE DE FABRICATION D'UNE TELLE FERRURE MULTI-BRANCHE**
MEHRFACH VERZWEIGTE FASSUNG AUS EINEM VERBUNDMATERIAL UND VERFAHREN ZUR HERSTELLUNG EINER SOLCHEN MEHRFACH VERZWEIGTEN FASSUNG
MULTI-BRANCH FITTING MADE OF COMPOSITE MATERIAL AND METHOD OF MANUFACTURING SUCH A MULTI-BRANCH FITTING

(30) Priorité: 19.01.2011 FR 1150400
(43) Date de publication de la demande: 27.11.2013
(73) Titulaire: SKF Aerospace France, 26240 Saint Vallier (FR)
(72) Inventeur: VALEMBOIS, Guy, F - 31650 Lauzerville (FR)
(74) Mandataire: Rhein, Alain
(86) Numéro de dépôt international: PCT/FR2012/050108
(87) Numéro de publication internationale: WO 2012/098333

(56) Documents cités:
- WO-A2-2009/140555
- FR-A1- 2 940 174
- US-A- 4 606 961
- US-A1- 2007 175 573

## Description

La présente invention a pour objet, dans le domaine des matériaux composites, une ferrure multi-branche, comprenant au moins trois branches, destinée à l'assemblage de pièces faisant entre elles un angle, ainsi qu'un procédé de fabrication d'une telle ferrure multi-branche.

Par ferrure multi-branche, on entend une ferrure comprenant au moins trois branches ou ailes plates ou sensiblement plates s'étendant radialement à partir d'une zone de jonction. Les branches ou ailes de ces ferrures multi-branche peuvent ne pas être obligatoirement toutes sécantes selon un même axe, et s'étendre selon des plans sécants extérieurement à la ferrure. Les ferrures multi-branche les plus fréquentes sont des cas particuliers tels que des ferrures en T, en Y ou en X.

Une ferrure multi-branche en matériau composite est essentiellement, mais non limitativement, destinée à être utilisée dans le domaine de l'aéronautique, par exemple pour relier deux pièces ou plus, et en remplacement de ferrures analogues réalisées jusque-là en métal. Ces ferrures sont destinées à être solidarisées aux pièces à relier, et sont ainsi pourvues, extérieurement au pliage, de zones d'accouplement destinées à permettre l'assemblage desdites pièces à relier, en association avec des moyens de solidarisation, lesquels peuvent consister, non limitativement, en des moyens de collage, rivetage ou vissage.

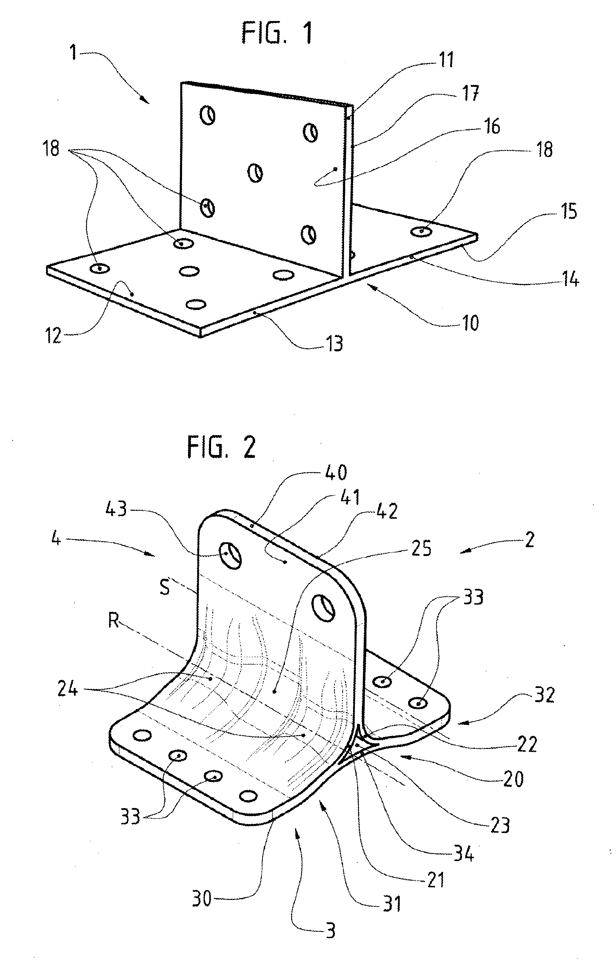

A tire d'exemple une ferrure multi-branche de l'état de la technique, en l'occurrence en T, est représentée à la figure 1. Cette ferrure en T 1 comporte une semelle 10, se présentant sous la forme d'une plaque, et une paroi transversale 11 qui s'étend d'un côté 12 de ladite semelle 10 en faisant avec celle-ci un angle, en l'occurrence un angle droit, et qui sépare ladite semelle en deux parties 13 et 14, en l'occurrence de mêmes dimensions, le coté de ladite semelle, opposé à celui duquel s'étend ladite paroi transversale constituant une face d'appui 15 destinée à venir au contact de l'une des pièces à fixer, tandis que l'une et/ou l'autre des deux faces 16 et 17 de ladite paroi transversale 11 constitue une face d'appui à une ou plusieurs autres pièces à fixer. Cette ferrure en T 1 comporte une multiplicité de trous 18 destinés à permettre la fixation des pièces à assembler, au travers de moyens de solidarisation tels que des vis ou rivets. Une telle ferrure en T 1 est obtenue par moulage d'un matériau composite, et plus exactement d'une matrice thermoplastique ou thermodurcissable renforcée de fibres.

Le remplacement des éléments métalliques par des éléments en matériau composite est essentiellement dicté par la nécessité d'un gain de poids. Cela présente toutefois des inconvénients du point de vue résistance.

Il est en effet connu que le point faible des matériaux composites est la matrice qui a une résistance spécifique très inférieure à celle des fibres. L'ordre de grandeur est par exemple de 20 MPa pour la résine et de 4000 Mpa pour la fibre de carbone. Aussi, le mode de ruine d'une pièce en composite est généralement une rupture de la résine liant les fibres, et pour une ferrure en T en matériau composite la rupture est observée lors d'un travail essentiellement en dépliage et au pliage de la paroi transverse, par rapport à la semelle.

Pour pallier cet inconvénient il conviendrait que ce soit les fibres de renfort qui soient soumises aux efforts en traction et/ou en compression, et que la résine ne soit pas ou peu sollicitée. Il n'est toutefois pas possible d'obtenir avec les techniques actuellement connues, une orientation optimale des fibres dans une telle pièce, ou alors à des coûts très élevés.

On connaît par le document WO2010072952, une ferrure en L, venant de moulage d'un matériau composite, qui comprend deux parties faisant entre-elles un angle, et percées de trous pour permettre la solidarisation de deux pièces au travers de moyen de fixation, l'une au moins desdites deux parties présentant du côté intérieur de ladite ferrure un profil courbe concave, et plus particulièrement un profil sphérique ou cylindrique, le ou les trous qui y sont pratiqués étant d'axe radial à la courbure.

Cette configuration permet que les fibres de renfort, ou une partie de celles-ci, soient orientées dans le sens de la traction et/ou de la compression, en sorte qu'elles soient sollicitées prioritairement par rapport à la résine.

Cependant, une telle ferrure en L ne peut pas être substituée à une ferrure multi-branche pour assembler des pièces faisant entre elles un angle, elle ne présente pas la rigidité voulue au pliage comme au dépliage. Il convient alors, pour remplacer une ferrure en T par exemple, d'utiliser deux de ces ferrures en L, comme préconisé dans ledit document WO2010072952, avec pour inconvénient une mise en oeuvre peu aisée et un défaut évident d'unicité de la pièce, entraînant un surcroît de poids.

On connaît par le document FR 2 940 174 une ferrure en matériau composite comportant plus exactement une matrice thermoplastique ou thermodurcissable renforcée de fibres, destinée à l'assemblage de pièces faisant entre elles un angle, qui comprend deux branches ou ailes plates ou sensiblement plates, et dont au moins une face ou partie de face est conformée pour constituer une face d'appui à une ou plusieurs desdites pièces à fixer, et d'autre part en ce que la liaison de chacune desdites branches ou ailes avec une autre branches ou aile voisine, est réalisée au travers d'une portion en forme de lame courbe.

La présente invention a pour but de proposer une ferrure multi-branche en matériau composite destinée à la liaison de pièces faisant entre elles un angle, et permettant de résoudre les divers inconvénients précités, ainsi que le procédé de fabrication d'une telle ferrure multi-branche.

La ferrure multi-branche, comprenant au moins trois branches, venant de moulage d'un matériau composite, et plus exactement d'une matrice thermoplastique ou thermodurcissable renforcée de fibres, destinée à l'assemblage de pièces faisant entre elles un angle, selon l'invention, comprenant au moins trois branches ou ailes plates ou sensiblement plates s'étendant radialement à partir d'une zone de jonction, et dont au moins une face ou partie de face est conformée pour constituer une face d'appui à une ou plusieurs desdites pièces à fixer, caractérisée en ce que d'une part ladite zone de jonction présente une section, dans le sens transversal c'est-à-dire perpendiculaire à au moins l'une desdites branches ou ailes, en forme de polygone aux côtés concaves, et d'autre part en ce que la liaison de chacune desdites branches ou ailes avec une autre branches ou aile voisine, est réalisée au travers d'une portion en forme de lame courbe qui donne à ladite zone de jonction l'une de ses formes concaves.

Selon une caractéristique additionnelle de la ferrure multi-branche selon l'invention, la zone de jonction présente en plus de son profil concave au niveau de la liaison de deux branches ou ailes voisines, une succession, dans son sens longitudinal, de parties bombées ou creuses.

Selon une autre caractéristique additionnelle de la ferrure multi-branche selon l'invention, les ailes ou branches comportent au niveau de leurs portions formant faces d'appui, des trous de passage de moyens de solidarisation.

Selon un mode de réalisation particulier de la ferrure multi-branche selon l'invention, elle présente un profil en T et comporte ainsi une semelle se présentant sous la forme d'une plaque, et une paroi transversale qui s'étend d'un côté de ladite semelle en faisant avec celle-ci un angle, et qui sépare ladite semelle en deux parties, le coté de ladite semelle, opposé à celui duquel s'étend ladite paroi transversale, constituant totalement ou en partie une face d'appui destinée à venir au contact de l'une desdites pièces à fixer, tandis que l'une et/ou l'autre des deux faces de ladite paroi transversale constitue totalement ou en partie une face d'appui à une ou plusieurs autres desdites pièces à fixer, ladite semelle et ladite paroi transversale étant prévues aptes à coopérer avec des moyens de solidarisation, la zone de jonction de ladite paroi transversale avec de la ladite semelle présentant une section transversale, dans le sens perpendiculaire au plan de ladite paroi transversale, en forme de triangle aux côtés concaves, tandis que la liaison de ladite paroi transversale à chacune desdites deux parties, est réalisée au travers d'une portion en forme de lame courbe.

Le procédé de fabrication d'une ferrure multi-branche en matériau composite, telle que définie précédemment, se caractérise essentiellement en ce qu'il consiste:
- à assembler entre elles autant de pièces qu'il y a de branches ou ailes, chacune desdites pièces étant d'une part destinée à constituer une portion, dans le sens de l'épaisseur, d'une branche ou aile, et une portion, dans le sens de l'épaisseur, d'une branche ou aile voisine, et d'autre part pliée selon un rayon de courbure pour former l'angle que doivent faire entre-elles lesdites branches ou ailes voisines,
- à disposer dans la zone de jonction, au contact desdites pièces, un noyau, durable ou non, épousant parfaitement les formes desdites pièces,
- enfin à disposer l'assemblage obtenu dans un moule et appliquer des conditions particulières de pression et/ou de température, en sorte de réaliser la polymérisation dudit matériau composite.

Selon une caractéristique additionnelle du procédé selon l'invention, il comprend préalablement les opérations suivantes:
- préparation de nappes en matériau composite constituées chacune d'une matrice dans laquelle sont noyées des fibres arrangées unidirectionnellement, afin de créer les pièces à assembler,
- mise en forme desdites nappes par pliage courbe, concentrique à un axe perpendiculaire à l'orientation desdites fibres.

Selon une autre caractéristique additionnelle du procédé selon l'invention, il comprend de plus, lors de la mise en forme des nappes de matériau composite, les opérations suivantes:
- réalisation pour chaque pièce, dans sa zone de pliage, une succession, dans le sens longitudinal de l'axe de pliage, de parties creuses ou bombées, lesquelles sont agencées de manière symétrique par rapport à celles créées dans la zone de pliage des pièces voisines, en sorte de permettre un emboîtement lors du rapprochement dos à dos desdites pièces.

Selon un mode de réalisation particulier du procédé selon l'invention, il consiste, pour la fabrication d'une ferrure multi-branche en T:
- à assembler trois pièces, à savoir deux pièces en forme de L, dont la zone de pliage est courbe, assemblées en sorte qu'une branche ou aile de l'une soit au contact d'une branche ou aile de l'autre, et que les deux autres branches ou ailes soient dans le prolongement l'une de l'autre, et une troisième pièce globalement plane disposée au contact desdites deux branches ou ailes dans le prolongement l'une de l'autre, et présentant au droit de la zone de jonction desdites deux branches ou ailes une partie bombée en direction de ladite zone de jonction.

Selon une caractéristique additionnelle du mode de réalisation particulier du procédé selon l'invention, il comprend préalablement les opérations suivantes :
- mise en forme d'une première nappe en matériau composite constituée d'une matrice dans laquelle sont noyées des fibres arrangées unidirectionnellement, afin de créer la première pièce en L dont la zone de pliage courbe est concentrique à un axe perpendiculaire à l'orientation desdites fibres, et qui présente une succession, dans le sens longitudinal dudit axe, de parties creuses ou bombées,
- mise en forme d'une deuxième nappe en matériau composite constituée d'une matrice dans laquelle sont noyées des fibres arrangées unidirectionnellement, afin de créer la seconde pièce en L dont la zone de pliage courbe est concentrique à un axe perpendiculaire à l'orientation desdites fibres, et qui présente une succession, dans le sens longitudinal dudit axe, de parties creuses ou bombées, lesquelles sont agencées de manière symétrique par rapport à celles créées dans ladite première nappe, en sorte de permettre un emboîtement lors du rapprochement dos à dos desdites pièces en L,
- mise en forme d'une troisième nappe en matériau composite constituée d'une matrice dans laquelle sont noyées des fibres arrangées unidirectionnellement, afin de créer la troisième pièce globalement plane, qui présente dans sa région médiane une zone transversale bombée le long de laquelle est pratiquée une succession de parties creuses et bombées aptes à coopérer étroitement en emboîtement avec les parties creuses ou bombées que comportent les parties desdites pièces en L avec lesquels ladite troisième pièce est destinée à venir en contact.

On notera que le procédé de réalisation peut présenter de nombreuses variantes, en fonction notamment des techniques de moulage utilisées.

Ainsi, dans le cas par exemple de l'utilisation d'un procédé de moulage par injection de résine sur un mat préformé, de type RTM (Resin Tranfer Moulding), il possible d'utiliser cette technique soit pour réaliser les pièces à assembler en remplacement de la mise en forme de nappes, soit de mouler la pièce intégralement par injection de résine alors que le moule incorpore le mat préformé et le noyau qui garantit le positionnement des fibres de renfort.

Les avantages et les caractéristiques de la ferrure multi-branche et du procédé de fabrication selon l'invention, ressortiront plus clairement de la description qui suit et qui se rapporte au dessin annexé, lequel en représente un mode de réalisation non limitatif.

Dans le dessin annexé :
- la figure 1 représente une vue schématique en perspective d'une ferrure en T de l'état de la technique.
- la figure 2 représente une vue schématique en perspective d'une ferrure en T selon l'invention.
- la figure 3 représente une vue schématique en perspective de la même ferrure en T en cours de fabrication.
- la figure 4 représente une vue schématique en élévation de côté de la même ferrure en T en cours de fabrication.
- la figure 5 représente une vue schématique en perspective et en coupe selon l'axe XX' de la figure 4.
- la figure 6 représente une vue schématique en perspective et en coupe selon le plan YY' de la figure 4.
- la figure 7 représente une vue schématique en perspective d'une partie de la même ferrure en T selon l'invention.

Dans un but de simplification, la description qui suit ne fait référence qu'à une ferrure multi-branche en T, sachant que d'autres configurations sont possibles.

En référence à la figure 2, on peut voir une ferrure en T 2 selon l'invention, qui comprend une semelle 3 surmontée d'une paroi transversale 4.

La semelle 3 présente une forme globalement plate, le côté opposé à celui duquel s'étend la paroi transversale 4, constitue une face d'appui 30 destinée à venir au contact de l'une de pièces, non représentées, à assembler.

La paroi transversale 4 s'étend perpendiculairement à la semelle 3, et sépare cette dernière en deux parties 31 et 32 de dimensions égales.

On notera que cette architecture constitue un mode de réalisation particulier, et qu'il est parfaitement possible que la paroi transversale 4 fasse avec la semelle 3 un angle autre qu'un angle droit, et/ou que cette paroi transversale 4 sépare la semelle 3 en deux parties de dimensions différentes.

De même, la semelle 3 peut présenter un pliage, par exemple au droit de la paroi 4, en sorte d'obtenir une ferrure multi-branche en Y, tandis qu'une autre paroi transversale peut s'étendre de la face d'appui 30 de la semelle 3, pour obtenir une ferrure multi-branche en X.

La paroi transversale 4 présente une partie extrême libre 40 dont les deux côtés 41 et 42 sont plans, en sorte de pouvoir constituer des faces de contact avec une ou plusieurs des pièces à assembler.

La solidarisation de la ferrure en T 2 et des pièces à assembler peut être réalisée de différentes manières, non limitativement par collage, vissage ou rivetage, en l'occurrence la semelle 3 et la paroi transversale 4 comportent des trous, respectivement 33 et 43, permettant le passage de vis ou rivets, non représentés.

La paroi transversale 4 est solidarisée à la semelle 3 au travers d'une zone de jonction 20 qui présente une section transversale, dans le sens perpendiculaire au plan de la paroi transversale 4, en forme de triangle dont les trois côtés sont concaves. Ainsi, la liaison entre la paroi 4 et la partie 31 de la semelle 3 est réalisée au travers d'une lame courbe concave 21 globalement concentrique à un axe R, tandis que la liaison entre la paroi 4 et la partie 32 de la semelle 3 est réalisée au travers d'une lame courbe concave 22 globalement concentrique à un axe S, et que la face 30 de la semelle 3 présente au droit de la paroi transversale 4, un renfoncement concave 34.

On notera la présence entre les lames 21 et 22, et la semelle 3, d'un noyau 23 qui, comme cela sera vu plus loin, n'est indispensable qu'à la fabrication.

La forme concave de la lame 21, participe à la résistance au dépliage de la paroi transversale 4 par rapport à la partie 31 de la semelle 3, et par conséquent au pliage de la paroi 4 sur la partie 32 de la semelle 3, tandis que la lame 22 participe à la résistance au dépliage de la paroi transversale 4 par rapport à la partie 32, et par conséquent au pliage de la paroi transversale 4 sur la partie 31.

On notera que le renfoncement concave 34 de la semelle 3 concourt à l'accroissement de la résistance au pliage et au dépliage.

Cette résistance au pliage et au dépliage est accrue par la présence d'ondulations résultant de déformations, constituées, au niveau de la zone de jonction 20, d'une succession, dans le sens longitudinal de la zone de jonction 20, de parties bombées 24 et creuses 25, en alternance.

Ces parties bombées et creuses sont essentiellement créées au niveau des lames 21 et 22, et de manière symétrique l'une par rapport à l'autre, comme cela sera vu plus loin.

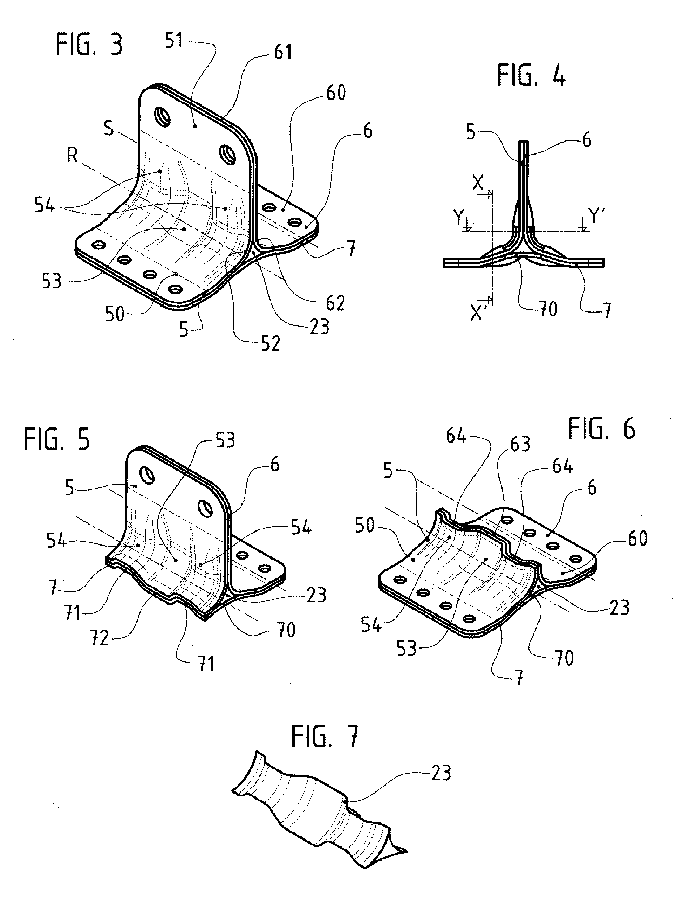

En référence maintenant aux figures 3, 4, 5 et 6, on peut voir la même ferrure en T 2, avant la phase de polymérisation permettant d'obtenir la ferrure en T 2 telle que représentée sur la figure 2.

Sur la figure 3, on peut voir que ferrure en T 2 vient de l'assemblage préalable de trois pièces, à savoir deux pièces en L 5 et 6, et une pièce 7 globalement plate.

La pièce en L 5 comporte deux ailes 50 et 51 reliées par une zone de pliage 52 courbe concentrique à l'axe R, tandis que la pièce en L 6 comporte deux ailes 60 et 61 reliées par une zone de pliage 62 courbe concentrique à l'axe S.

Les deux pièces en L 5 et 6 viennent chacune de la mise en forme d'une nappe de matériau composite constituée d'une matrice dans laquelle sont noyées des fibres arrangées unidirectionnellement dans le sens perpendiculaire à la ligne de pliage, en sorte que ces fibres soient enroulées concentriquement aux axes, respectivement, R et S.

Comme on peut le voir sur les figures 5 et 6, les pièces en L 5 et 6 comportent également, au niveau essentiellement des zones de pliage 52 et 62, de déformations à savoir pour la pièce en L 5, un creux médian 53 bordé de deux bossages 54, et pour la pièce en L 6, un bossage médian 63 bordé de deux creux 64.

Les deux pièces en L sont assemblées dos à dos, c'est-à-dire que les ailes 51 et 61 sont accolées l'une à l'autre tandis que les ailes 50 et 60 sont dans le prolongement l'une de l'autre, avec concordance parfaite du creux médian 53 avec le bossage médian 63, et des creux 64 avec les bossages 54.

La pièce 7 globalement plate complète l'assemblage en étant appliquée contre les ailes 50 et 60. cette pièce 7 vient également de la mise en forme d'une nappe de matériau composite constituée d'une matrice dans laquelle sont noyées des fibres arrangées unidirectionnellement dans le sens parallèle à celui des fibres des parties 50 et 60.

La pièce 7 présente dans sa région médiane une zone transversale bombée 70, destinée à prendre place, dans l'assemblage, au droit de la jonction des pièces en L 5 et 6. Cette pièce transversale bombée 70 comporte de plus des déformations, à savoir des creux 71 et des bossages 72, visibles sur la figure 5, destinés à coopérer en emboîtement avec les creux 53 et 64, et les bossages 54 et 63 des ailes 50 et 60.

On comprendra que l'assemblage des ailes 51 et 61 est destiné à constituer, après moulage, la paroi transversale 4 de la ferrure en T 2, tandis que l'assemblage des ailes 50 et 60 à la pièce 7 est destiné à constituer la semelle 3, et que les zones de pliage 52 et 62 sont destinées à constituer les lames, respectivement 21 et 22.

On notera que l'assemblage est complété par la mise en place préalable d'un noyau 23, représenté sur la figure 7, qui est conçu apte à s'emboîter étroitement entre les pièces 5, 6 et 7, en sorte que celles-ci conservent, pendant l'opération de moulage jusqu'à polymérisation, leurs formes initiales, et surtout garantir le rayon de courbure optimisé des zones de pliage 52 et 62 et donc des fibres de renfort qu'elles renferment.

Le noyau 23 est indispensable à l'opération de moulage, il permet ainsi qu'il n'y ait pas d'affaissement des pièces 5 et 6 sur la pièce 7 au niveau des zones de pliage. Par contre il n'est pas indispensable à l'utilisation de la ferrure en T 2, il peut par conséquent consisté, non limitativement, en une vessie gonflable, en une pièce en élastomère démontable après moulage, ou en une pièce en matériau fusible.

La ferrure en T 2 permet d'optimiser l'utilisation des fibres de renfort que contiennent les nappes de matériau composite utilisées. Du fait de la forme courbe concave des lames 21 et 22, forme que suivent les fibres, les efforts au dépliage sont supportés presque en grande partie par ces fibres.

Les déformations 53, 54, 63 et 64, permettent de créer les parties bombées 24 et creuses 25, et donc d'accroître la résistance de la ferrure en T 2, tout en conservant une épaisseur constante des parois de la ferrure en T 2, et donc sans accroissement de son poids.

## Revendications

1. Ferrure multi-branche (2), comprenant au moins trois branches, venant de moulage d'un matériau composite, et plus exactement d'une matrice thermoplastique ou thermodurcissable renforcée de fibres, destinée à l'assemblage de pièces faisant entre elles un angle, qui comprend au moins trois branches ou ailes (4, 31, 32) plates ou sensiblement plates s'étendant radialement à partir d'une zone de jonction (20), et dont au moins une face ou partie de face (30, 41, 42) est conformée pour constituer une face d'appui à une ou plusieurs desdites pièces à fixer, ladite zone de jonction (20) présentant d'une part une section, dans le sens transversal c'est-à-dire perpendiculaire à au moins l'une desdites branches ou ailes (4, 31, 32), en forme de polygone aux côtés concaves, et la liaison de chacune desdites branches ou ailes (4, 31, 32) avec une autre branches ou aile voisine (4, 31, 32), étant réalisée d'autre part au travers d'une portion en forme de lame courbe (21, 22, 34) qui donne à ladite zone de jonction (20) l'une de ses formes concaves.

2. Ferrure multi-branche selon la revendication 1, **caractérisée en ce que** la zone de jonction (20) présente en plus de son profil concave au niveau de la liaison de deux branches ou ailes voisines (4, 31, 32), une succession, dans son sens longitudinal, de parties bombées ou creuses (24, 25).

3. Ferrure multi-branche selon la revendication 1, ou la revendication 2 **caractérisée en ce que**, les ailes ou branches (4, 31, 32) comportent au niveau de leurs portions formant faces d'appui, des trous (33, 43) de passage de moyens de solidarisation.

4. Ferrure multi-branche selon l'une quelconque des revendications 1 à 3, **caractérisée en ce qu'**elle présente un profil en T et comporte ainsi une semelle (3) se présentant sous la forme d'une plaque, et une paroi transversale '4) qui s'étend d'un côté de ladite semelle (3) en faisant avec celle-ci un angle, et qui sépare ladite semelle (3) en deux parties (31, 32), le coté (30) de ladite semelle (3), opposé à celui duquel s'étend ladite paroi transversale (4), constituant totalement ou en partie une face d'appui destinée à venir au contact de l'une desdites pièces à fixer, tandis que l'une et/ou l'autre des deux faces (41, 42) de ladite paroi transversale (4) constitue totalement ou en partie une face d'appui à une ou plusieurs autres desdites pièces à fixer, ladite semelle et ladite paroi transversale étant prévues aptes à coopérer avec des moyens de solidarisation, la zone de jonction de ladite paroi transversale (4) avec de la ladite semelle (3) présentant une section transversale, dans le sens perpendiculaire au plan de ladite paroi transversale (4), en forme de triangle aux côtés concaves, tandis que la liaison de ladite paroi transversale (4) à chacune desdites deux parties (41, 42), est réalisée au travers d'une portion en forme de lame courbe (21, 22).

5. Procédé de fabrication d'une ferrure multi-branche en matériau composite, selon l'une quelconque des revendications 1 à 4, **caractérisé en ce qu'**il consiste :
- à assembler entre elles autant de pièces (5, 6, 7) qu'il y a de branches ou ailes (4, 31, 32), chacune desdites pièces (5, 6, 7) étant d'une part destinée à constituer une portion, dans le sens de l'épaisseur, d'une branche ou aile (4, 31, 32), et une portion, dans le sens de l'épaisseur, d'une branche ou aile voisine (4, 31, 32), et d'autre part pliée selon un rayon de courbure pour former l'angle que doivent faire entre-elles lesdites branches ou ailes voisines (4, 31, 32),
- à disposer dans la zone de jonction (20), au contact desdites pièces, un noyau (23), durable ou non, épousant parfaitement les formes desdites pièces (5, 6, 7),
- enfin à disposer l'assemblage obtenu dans un moule et appliquer des conditions particulières de pression et/ou de température, en sorte de réaliser la polymérisation dudit matériau composite.

6. Procédé de fabrication d'une ferrure multi-branche selon la revendication 5, **caractérisé en ce qu'**il comprend préalablement les opérations suivantes:
- préparation de nappes en matériau composite constituées chacune d'une matrice dans laquelle sont noyées des fibres arrangées unidirectionnellement, afin de créer les pièces (5, 6, 7) à assembler,
- mise en forme desdites nappes par pliage courbe, concentrique à un axe (R, S) perpendiculaire à l'orientation desdites fibres.

7. Procédé de fabrication d'une ferrure multi-branche selon la revendication 6, **caractérisé en ce qu'**il comprend de plus, lors de la mise en forme des nappes de matériau composite, les opérations suivantes:
- réalisation pour chaque pièce (5, 6, 7), dans sa zone de pliage (52, 62, 70), une succession, dans le sens longitudinal de l'axe de pliage, de parties creuses ou bombées (53, 54, 63, 64), lesquelles sont agencées de manière symétrique par rapport à celles créées dans la zone de pliage des pièces voisines, en sorte de permettre un emboîtement lors du rapprochement dos à dos desdites pièces (5, 6, 7).

8. Procédé de fabrication d'une ferrure multi-branche selon l'une quelconque des revendications 5 à 7, **caractérisé en ce qu'**il consiste, pour la fabrication d'une ferrure multi-branche en T (2):
- à assembler trois pièces, à savoir deux pièces en forme de L, dont la zone de pliage est courbe, assemblées en sorte qu'une branche ou aile de l'une soit au contact d'une branche ou aile de l'autre, et que les deux autres branches ou ailes soient dans le prolongement l'une de l'autre, et une troisième pièce globalement plane disposée au contact desdites deux branches ou ailes dans le prolongement l'une de l'autre, et présentant au droit de la zone de jonction desdites deux branches ou ailes une partie bombée en direction de ladite zone de jonction.

9. Procédé de fabrication d'une ferrure multi-branche selon la revendication 8, **caractérisé en ce qu'**il comprend préalablement les opérations suivantes :
- mise en forme d'une première nappe en matériau composite constituée d'une matrice dans laquelle sont noyées des fibres arrangées unidirectionnellement, afin de créer la première pièce en L dont la zone de pliage courbe est concentrique à un axe perpendiculaire à l'orientation desdites fibres, et qui présente une succession, dans le sens longitudinal dudit axe, de parties creuses ou bombées,
- mise en forme d'une deuxième nappe en matériau composite constituée d'une matrice dans laquelle sont noyées des fibres arrangées unidirectionnellement, afin de créer la seconde pièce en L dont la zone de pliage courbe est concentrique à un axe perpendiculaire à l'orientation desdites fibres, et qui présente une succession, dans le sens longitudinal dudit axe, de parties creuses ou bombées, lesquelles sont agencées de manière symétrique par rapport à celles créées dans ladite première nappe, en sorte de permettre un emboîtement lors du rapprochement dos à dos desdites pièces en L,
- mise en forme d'une troisième nappe en matériau composite constituée d'une matrice dans laquelle sont noyées des fibres arrangées unidirectionnellement, afin de créer la troisième pièce globalement plane, qui présente dans sa région médiane une zone transversale bombée le long de laquelle est pratiquée une succession de parties creuses et bombées aptes à coopérer étroitement en emboîtement avec les parties creuses ou bombées que comportent les parties desdites pièces en L avec lesquels ladite troisième pièce est destinée à venir en contact.

## Patentansprüche

1. Mehrfach verzweigte Fassung (2), umfassend wenigstens drei Schenkel, hergestellt durch Formpressen von Verbundmaterial, und genauer einer mit Fasern verstärkten thermoplastischen oder duroplastischen Matrize, für die Zusammenfügung von Teilen, die zwischen ihnen einen Winkel bilden, die zumindest drei flache oder im Wesentlichen flache Schenkel oder Flügel (4, 31, 32) umfasst, die sich radial ab einem Verbindungsbereich (20) erstrecken, und von denen wenigstens eine Fläche oder ein Flächenteil (30, 41, 42) gestaltet ist, um eine Auflagefläche für eines oder mehreren der besagten zu befestigenden Teile zu bilden, wobei der Verbindungsbereich (20) einerseits einen als ein Polygon mit konkaven Seiten gestalteten Querschnitt in Querrichtung, d.h. senkrecht zu mindestens einem der besagten Schenkel oder Flügel (4, 31, 32) aufweist, und die Verbindung jedes der besagten Schenkel oder Flügel (4, 31, 32) mit einem anderen, benachbarten Schenkel oder Flügel (4, 31, 32) andererseits über einen als ein gewölbtes Blättchen (21, 22, 34) gestalteten Teil erfolgt, der dem besagten Verbindungsbereich (20) eine seiner konkaven Formen verleiht.

2. Mehrfach verzweigte Fassung nach Anspruch 1, **dadurch gekennzeichnet, dass** der Verbindungsbereich (20) zusätzlich zu seinem konkaven Profil im Bereich der Verbindung von zwei benachbarten Schenkeln oder Flügeln (4, 31, 32) eine Folge in seiner Längsrichtung von gewölbten oder hohlen Teilen (24, 25) aufweist.

3. Mehrfach verzweigte Fassung nach Anspruch 1 oder Anspruch 2, **dadurch gekennzeichnet, dass** die Flügel oder Schenkel (4, 31, 32) im Bereich ihrer Auflageflächen bildenden Teile Löcher (33, 43) für den Durchgang von Befestigungsmitteln umfassen.

4. Mehrfach verzweigte Fassung nach irgendeinem der Ansprüche 1 bis 3, **dadurch gekennzeichnet, dass** sie ein T-förmiges Profil aufweist und also eine Sohle (3) umfasst, die als eine Platte ausgestaltet ist, und eine Querwand (4), die sich von einer Seite der besagten Sohle (3) erstreckt, wobei sie mit dieser letzteren einen Winkel bildet, und die die besagte Sohle (3) in zwei Teile (31, 32) trennt, wobei die Seite (30) der besagten Sohle (3), die derjenigen gegenüberliegt, ab der sich die besagte Querwand (4) erstreckt, ganz oder teilweise eine Auflagefläche bildet, die dazu bestimmt ist, mit einem der besagten zu befestigenden Teilen in Berührung zu kommen, während die eine und/oder die andere der beiden Flächen (41, 42) der besagten Querwand (4) ganz oder teilweise eine Auflagefläche für einen oder mehreren anderen der besagten zu befestigenden Teile bildet, wobei die besagte Sohle und die besagte Querwand geeignet vorgesehen sind, um mit Befestigungsmitteln zusammenzuwirken, wobei der Verbindungsbereich der besagten Querwand (4) mit der besagten Sohle (3) einen Querschnitt in der Richtung senkrecht zur Ebene der besagten Querwand (4) aufweist, der als ein Dreieck mit konkaven Seiten gestaltet ist, während die Verbindung der besagten Querwand (4) mit jedem der besagten zwei Teile (41, 42) über einen als ein gewölbtes Blättchen (21, 22) gestalteten Teil erfolgt.

5. Verfahren zur Herstellung einer mehrfach verzweigten Fassung aus Verbundmaterial nach irgendeinem der Ansprüche 1 bis 4, **dadurch gekennzeichnet, dass** es darin besteht:
- soviele Stücke (5, 6, 7), wie es Schenkel oder Flügel (4, 31, 32) gibt, mit einander zusammenzufügen, wobei jedes der Teile (5, 6, 7) einerseits dazu bestimmt ist, in Richtung der Dicke einen Teil eines Schenkels oder Flügels (4, 31, 32) und in Richtung der Dicke einen Teil eines benachbarten Schenkels oder Flügels (4, 31, 32) zu bilden, und andererseits nach einem Krümmungsradius gebogen ist, um den Winkel zu bilden, der die besagten benachbarten Schenkel oder Flügel (4, 31, 32) mit einander umfassen müssen,
in den Verbindungsbereich (20) einen dauerhaften oder nicht dauerhaften Kern (23) in Berührung mit den besagten Teilen anzuordnen, der genau mit den Formen der besagten Teile (5, 6, 7) übereinstimmt,
schließlich die erhaltene Zusammenfügung in eine Pressform anzuordnen und besondere Druck- und/oder Temperaturbedingungen anzuwenden, um die Polymerisation des besagten Verbundwerkstoffs zustandezubrengen.

6. Verfahren zur Herstellung einer mehrfach verzweigten Fassung nach Anspruch 5, **dadurch gekennzeichnet, dass** es zuvor folgende Vorgänge umfasst:
- Vorbereitung von Verbundmaterialbahnen, die jeweils aus einer Matrize bestehen, in der unidirektional angeordnete Fasern eingebettet sind, um die zusammenzufügenden Teile (5, 6, 7) zu bilden,
- Formgebung der besagten Bahnen durch gewölbtes Biegen konzentrisch zu einer Achse (R, S) senkrecht zur Ausrichtung der besagten Fasern.

7. Verfahren zur Herstellung einer mehrfach verzweigten Fassung nach Anspruch 6, **dadurch gekennzeichnet, dass** es bei der Formung der Bahnen aus Verbundmaterial ferner folgende Vorgänge umfasst:
für jedes Teil (5, 6, 7), Bildung in seinem Biegebereich (52, 62, 70) einer Folge in der Längsrichtung der Biegeachse von hohlen oder gewölbten Teilen (53, 54, 63, 64), die symmetrisch zu denjenigen, die im Biegebereich der benachbarten Teile gebildet sind, angeordnet sind, um eine Verschachtelung während der Annäherung Rücken an Rücken der besagten Teile (5, 6, 7) zu ermöglichen.

8. Verfahren zur Herstellung einer mehrfach verzweigten Fassung nach irgendeinem der Ansprüche 5 bis 7, **dadurch gekennzeichnet, dass** es für die Herstellung einer T-förmigen mehrfach verzweigten Fassung (2) darin besteht :
drei Teile, nämlich zwei L-förmige Teile, deren Biegebereich gewölbt ist, die so zusammengefügt werden, daß ein Flügel oder Schenkel des einen in Berührung mit einem Flügel oder Schenkel des anderen kommt, und dass die anderen zwei Schenkel oder Flügel sich in der Verlängerung voneinander befinden, und ein drittes, global flaches Teil, das in Berührung mit den zwei Schenkeln oder Flügeln in der Verlängerung von einander angeordnet ist, und gegenüber dem Verbindungsbereich der besagten zwei Schenkel oder Flügel einen in Richtung des besagten Verbindungsbereichs gewölbten Teil aufweist, zusammenzufügen.

9. Verfahren zur Herstellung einer mehrfach verzweigten Fassung nach Anspruch 8, **dadurch gekennzeichnet, dass** es zuvor die folgenden Vorgänge umfasst:
- Gestalten einer ersten Bahn aus Verbundmaterial, die aus einer Matrize besteht, in der unidirektional angeordnete Fasern eingebettet sind, um das erste L-förmige Teil zu bilden, dessen gewölbtes Biegebereich konzentrisch zu einer Achse senkrecht zu der Ausrichtung der besagten Fasern ist, und das in der Längsrichtung der besagten Achse eine Folge von hohlen oder gewölbten Teilen aufweist,
- Gestalten einer zweiten Bahn aus Verbundmaterial, die aus einer Matrize besteht, in der unidirektional angeordnete Fasern eingebettet sind, um das zweite L-förmige Teil zu bilden, dessen gewölbtes Biegebereich konzentrisch zu einer Achse senkrecht zu der Ausrichtung der besagten Fasern ist, und das in der Längsrichtung der besagten Achse eine Folge von hohlen oder gewölbten Teilen aufweist, die symmetrisch In Bezug auf diejenigen angeordnet sind, die in der ersten Bahn gebildet sind, um eine Verschachtelung während der Annäherung Rücken an Rücken der besagten L-förmigen Teile zu ermöglichen,
- Gestalten einer dritten Bahn aus Verbundmaterial, die aus einer Matrize besteht, in der unidirektional angeordnete Fasern eingebettet sind, um das dritte global flache Teil zu bilden, das in seinem Mittelbereich einen gewölbten Querbereich aufweist, entlang dem eine Reihe von hohlen und gewölbten Teile vorgesehen sind, die geeignet sind, um in Verschachtelung eng mit den hohlen oder gewölbten Teilen zusammenzuwirken, die die Teile der besagten L-förmigen Teile umfassen, mit den das dritte Teil dazu bestimmt, in Berührung zu kommen.

## Claims

1. Multi-branch fitting (2), comprising at least three branches, obtained by molding a composite material, and more specifically a thermoplastic or thermosetting matrix reinforced with fibers, aimed at assembling parts forming between them an angle, which comprises at least three flat or substantially flat branches or wings (4, 31, 32) extending radially from a joining area (20), and at least one face or portion of a face (30, 41, 42) of which is shaped so as to form a resting face for one or several of said parts to be fastened, said joining area (20) having, on the one hand, a cross-section in the transverse direction, i.e. perpendicular to the at least one of said branches or wings (4, 31, 32), having the shape of a polygon with concave sides, and the connection of each of said branches or wings (4, 31, 32) with another neighboring branch or wing (4, 31, 32) is performed, on the other hand, through a portion in the form of a curved blade (21, 22, 34), which provides said joining area (20) with one of its concave shapes.

2. Multi-branch fitting according to claim 1, wherein the joining area (20) has, in addition to its concave profile at the level of the connection of two adjacent branches or wings (4, 31, 32), a succession, in its longitudinal direction, of arched or hollow portions (24, 25).

3. Multi-branch fitting according to claim 1 or claim 2, wherein the wings or branches (4, 31, 32) include at the level of their portions forming resting faces, holes (33, 43) for the passing through of means for making integral.

4. Multi-branch fitting according to any one of claims 1 to 3, wherein it has a T-shaped profile and thus includes a sole (3) in the form of a plate, and a transverse wall (4) extending at one side of said sole (3), forming an angle with the latter, and which separates said sole (3) into two portions (31, 32), the side (30) of said sole (3) opposite to that from which said transverse wall (4) extends constituting the whole or part of a resting surface aimed at entering into contact with one of said parts to be fastened, while one and/or the other of the two faces (41, 42) of said transverse wall (4) constitutes completely or partly a resting surface for one or several other of said parts to be fastened, said sole and said transverse wall being designed capable of cooperating with means for making integral, the joining area of said transverse wall (4) with said sole (3) having a cross-section, in the direction perpendicular to the plane of said transverse wall (4), in the form of a triangle with concave sides, while the connection of said transverse wall (4) with each of said two portions (41, 42) is made through a portion in the form of curved blade (21, 22).

5. Method for manufacturing a multi-branch fitting of composite material according to any one of claims 1 to 4, wherein it consists in:
- assembling between them as many parts (5, 6, 7) as there are branches or wings (4, 31, 32), each of said parts (5, 6, 7) being, on the one hand, aimed at constituting a portion, in the direction of the thickness, of a branch or wing (4, 31, 32) and a portion, in the direction of the thickness, of a neighboring branch or wing (4, 31, 32) and, on the other hand, bent according to a radius of curvature for forming the angle said adjacent branches or wings (4, 31, 32) should form between them,
- arranging in the joining area (20), into contact with said parts, a core (23), whether durable or not, perfectly matching the shapes of said parts (5, 6, 7),
- finally, arranging the assembly obtained in a mold and applying particular conditions of pressure and/or temperature, so as to perform the polymerization of said composite material.

6. Method for manufacturing a multi-branch fitting according to claim 5, wherein it comprises previously the following operations:
- preparing webs of composite material each consisting of a matrix in which unidirectionally arranged fibers are embedded, in order to create the parts (5, 6, 7) to be assembled,
- shaping said webs by curved bending, concentric to an axis (R, S) perpendicular to the orientation of said fibers.

7. Method for manufacturing a multi-branch fitting according to claim 6, wherein it comprises in addition, during the shaping of the webs of composite material, the following operations:
- making for each part (5, 6, 7), in its bending area (52, 62, 70), a succession, in the longitudinal direction of the bending axis, hollow or arched portions (53, 54, 63, 64), which are arranged symmetrically relative to those created in the bending area of the neighboring parts, so as to permit an encasement during the bringing closer back to back of said parts (5, 6, 7).

8. Method for manufacturing a multi-branch fitting according to any one of claims 5 to 7, wherein it consists, for manufacturing a T-shaped multi-branch fitting (2), in:
- assembling three parts, namely two L-shaped parts, the bending area of which is curved, assembled so that a branch or wing of one of them is into contact with a branch or wing of the other one, and that the other two branches or wings are in the extension of each other, and a third globally planar part arranged into contact with said two branches or wings in the extension of each other, and having in front of the joining area of said two branches or wings a portion arched in the direction of said joining area.

9. Method for manufacturing a multi-branch fitting according to claim 8, wherein it comprises previously the following operations:
- shaping a first web of composite material comprised of a matrix in which unidirectionally arranged fibers are embedded, in order to create the first L-shaped part the curved bending area of which is concentric to an axis perpendicular to the orientation of said fibers, and which has a succession, in the longitudinal direction of said axis, of hollow or arched portions,
- shaping a second web of composite material comprised of a matrix in which unidirectionally arranged fibers are embedded, in order to create the second L-shaped part the curved bending area of which is concentric to an axis perpendicular to the orientation of said fibers, and which has a succession, in the longitudinal direction of said axis, of hollow or arched portions, which are arranged symmetrically relative to those created in said first web, so as to permit an encasement during the bringing closer back to back of said L-shaped parts,
- shaping a third web of composite material comprised of a matrix in which unidirectionally arranged fibers are embedded, in order to create the third globally planar part, which has, in its median region, an arched transverse area along which is provided for a succession of hollow and arched portions capable of closely cooperating in encasement with the hollow or arched portions the portions of said L-shaped parts, which said third part is aimed at entering into contact with, include.
